# EUROPEAN PATENT APPLICATION

(11) **EP 2 837 803 A1**
(43) Date of publication of application: **18.02.2015**
(21) Application number: 13776253.0
(22) Date of filing: 07.02.2013
(51) Int. Cl.: F02D 19/08, F02D 19/06, F02B 77/04, F02M 61/14

(54) **DUAL-FUEL DIESEL ENGINE AND METHOD FOR OPERATING SAME**

(30) Priority: 11.04.2012 JP 2012090234
(71) Applicant: Mitsubishi Heavy Industries, Ltd., Tokyo 108-8215 (JP)
(72) Inventor: ISHIDA, Hiroyuki, Tokyo 108-8215 (JP); YUUKI, Akihiro, Tokyo 108-8215 (JP); MIYANAGI, Akihiro, Tokyo 108-8215 (JP); HIRAOKA, Naohiro, Tokyo 108-8215 (JP); KOMADA, Yasuyuki, Tokyo 108-8215 (JP)
(74) Representative: Hoffmann Eitle
(86) International application number: PCT/JP2013/052936
(87) International publication number: WO 2013/153844

(57) **Abstract**

An object is to, during operation in the single combustion mode where only an oil fuel is injected, prevent blockage of nozzle holes of gas fuel injectors so as to smoothly shift from the single combustion mode to a dual combustion mode. When shifting to the single combustion mode, an electromagnetic opening-and-closing valve V₁ is closed so as to block a gas fuel. Then, an electromagnetic opening-and-closing valve V₃ is opened so as to discharge the gas fuel remaining in a gas fuel supply path 50 to the outside of the system. Then, an electromagnetic opening-and-closing valve V₂ is opened so as to introduce a replacement gas from a replacement gas reservoir tank 44 to the gas fuel supply path 50, thereby replacing the contents inside the gas fuel supply path 50 with the replacement gas. After completing the replacement, the electromagnetic opening-and-closing valves V₂ and V₃ are closed. Next, the electromagnetic opening-and-closing valve V₂ is opened and the replacement gas is injected from the gas fuel injectors 26 to a combustion chamber "c".

## Description

### TECHNICAL FIELD

The present invention relates to a dual-fuel diesel engine and an operation method of the same, in which, using an oil fuel such as gas oil having high compression-ignition properties as a pilot fuel, the oil fuel and a gas fuel are injected so as to cause self-ignition of the oil fuel, thereby combusting the gas fuel.

### BACKGROUND

Conventionally, there has been known a dual-fuel diesel engine where a gas fuel such as natural gas or the like is used as a main fuel while an oil fuel having high compression-ignition properties is used as a pilot fuel, and the oil fuel is caused to self-ignite inside a high-temperature combustion chamber so as to combust the gas fuel being the main fuel. An object of a dual-fuel diesel engine is, by using a gas fuel that can be easily mixed with the air, to prevent incomplete combustion and to make exhaust gas less harmful, as well as to reduce fuel cost.

Patent Documents 1 and 2 disclose a dual-fuel diesel engine. The dual-fuel diesel engine in Patent Document 1 is configured such that a pilot fuel injection valve is positioned upstream in the direction of a swirl flow with respect to a gas fuel injection valve, and a pilot fuel and a gas fuel are injected in the flowing direction of the swirl, so as to securely ignite the gas fuel. Patent Document 2 proposes a dual-fuel diesel engine that makes it possible to modify an existing diesel engine to a dual-fuel diesel engine at low cost.

### Citation List

### Patent Literature

Patent Document 1: JPS62-45339 (Utility model application); specification and drawings

### SUMMARY

### Technical Problem

A dual-fuel diesel engine has a dual-combustion mode in which an oil fuel and a gas fuel are injected at the same time, and a single-combustion mode in which only the oil fuel is solely injected. The single-combustion mode is, for instance, operated in an extremely-low operating range immediately after starting operation. However, there is a possibility of combustion residues adhering to a nozzle hole of a gas fuel injector and blocking the nozzle hole during the single-combustion mode. As a result, there is a problem raised in the smooth shift to the dual-combustion mode.

In view of the above problem of the prior art, an object of the present invention is to, in a dual-fuel diesel engine, prevent blockage of the nozzle hole of a gas fuel injector during operation in the single-combustion mode so as to smoothly shift from the single-combustion mode to the dual-combustion mode.

### Solution to Problem

In order to achieve the above object, an operation method for a dual-fuel diesel engine of the present invention includes: a first step of operating the dual-fuel diesel engine in a single injection mode in which only oil fuel is injected into the combustion chamber; and a second step of injecting a replacement gas from the gas fuel injector so as to remove a combustion residues adhering to a nozzle hole of the gas fuel injector upon a pressure in the combustion chamber becoming lower than a supply pressure of the replacement gas during operation in the single combustion mode.

As a result, while operating in the single injection mode in which only the oil fuel is injected, it is possible to blow off combustion residues adhering to the nozzle hole of the gas fuel injector so as to prevent blockage of the nozzle hole. Thus, it is possible to smoothly shift from the single-combustion mode to the dual-combustion mode. "Upon the pressure in the combustion chamber becoming lower than the supply pressure of the replacement gas" means, for instance, the time when the piston is in the vicinity of the bottom dead center and the pressure inside the combustion chamber has decreased. At this time, it becomes easier to inject a replacement gas from the gas fuel injector. As the replacement gas, an inert gas such as nitrogen gas, the air, or the like may be used.

In the case where a supply unit of the replacement gas includes a replacement gas reservoir tank connected to the gas fuel injector through a replacement gas supply path, in the second step, the replacement gas may be injected into the combustion chamber from the replacement gas reservoir tank upon the pressure in the combustion chamber becoming lower than a pressure in the replacement gas reservoir tank. As a result, only by opening the opening-and-closing valve disposed in the replacement gas supply path, it is possible to supply the replacement gas to the combustion chamber by the pressure of the replacement gas reservoir tank. Thus, no drive device is needed for supplying the replacement gas.

In order to achieve the above object, a dual-fuel diesel engine of the present invention that can be directly used to implement the method of the present invention includes: an oil fuel supply device configured to supply the oil fuel to a pilot fuel injector; a gas fuel supply device configured to supply the gas fuel to a gas fuel injector; a replacement gas supply device configured to supply a replacement gas to the gas fuel injector; a piston position detection device configured to detect a position of the piston; and a controller configured to inject the replacement gas from the gas fuel injector upon a pressure in the combustion chamber becoming lower than a supply pressure of the replacement gas during operation in a single injection mode in which only the oil fuel is injected into the combustion chamber.

With the above configuration, during operation in the single injection mode in which only the oil fuel is injected, it is possible to blow off combustion residues adhering to the nozzle hole of the gas fuel injector so as to prevent blockage of the nozzle hole of the gas fuel injector by injecting the replacement gas from the gas fuel injector. Thus, it is possible to smoothly shift from the single-combustion mode to the dual-combustion mode. Further, upon a pressure inside the combustion chamber becoming lower than a supply pressure of the replacement gas, it becomes easier to inject the replacement gas by injecting the replacement gas from the gas fuel injector.

In the above configuration, it may be configured such that the gas fuel supply device includes a gas fuel reservoir tank connected to the gas fuel injector via a gas fuel supply path and a first opening-and-closing valve disposed in the gas fuel supply path. The replacement gas supply device may include a replacement gas reservoir tank connected to the gas fuel injector via a replacement gas fuel supply path that branches from the gas fuel supply path at a downstream side relative to the first opening-and-closing valve and a second opening-and-closing valve disposed in the replacement gas supply path. Further, the dual-fuel diesel engine may further include an atmosphere introducing path that branches from the gas fuel supply path at a downstream side relative to a branch point where the replacement gas supply path branches and a third opening-and-closing valve disposed in the atmosphere introducing path. The controller may be configured capable of controlling each of the opening-and-closing valves.

With the above configuration, it is possible to automate injection of the replacement gas in the single-combustion mode by a simple mechanism where the controller only controls the first to third opening-and-closing valves. Further, upon switching between the dual-combustion mode and the single-combustion mode, it is possible to discharge the gas fuel or the replacement gas that has remained in the gas fuel supply path to the outside air from the atmosphere introducing path. Thus, the previously remaining gas is not injected from the gas fuel injector immediately after switching, which makes it possible to switch smoothly to supplying the next gas.

### Advantageous Effects

According to the present invention, during operation in the single injection mode in which only the oil fuel is injected, it is possible to blow off combustion residues adhering to the nozzle holes of the gas fuel injectors by injecting the replacement gas from the gas fuel injectors. Thus, it is possible to prevent blockage of the nozzle holes of the gas fuel injectors and to smoothly shift from the single-combustion mode to the dual-combustion mode. Further, upon the piston being in the region of the bottom dead center and the combustion chamber having low pressure, it becomes easier to inject the replacement gas by injecting the replacement gas from the gas fuel injectors.

### BRIEF DESCRIPTION OF DRAWINGS

FIG. 1 is a front cross-sectional view of a dual-fuel diesel engine according to one embodiment of the method and device of the present invention.
FIG. 2 is a side cross-sectional view of the dual-fuel diesel engine according to the above embodiment.
FIG. 3 is a diagram of a relationship between the pressure inside a combustion chamber and an injection timing of a replacement gas according to the above embodiment.
FIG. 4 is a table of an operation procedure for performing injection of the replacement gas in the above embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

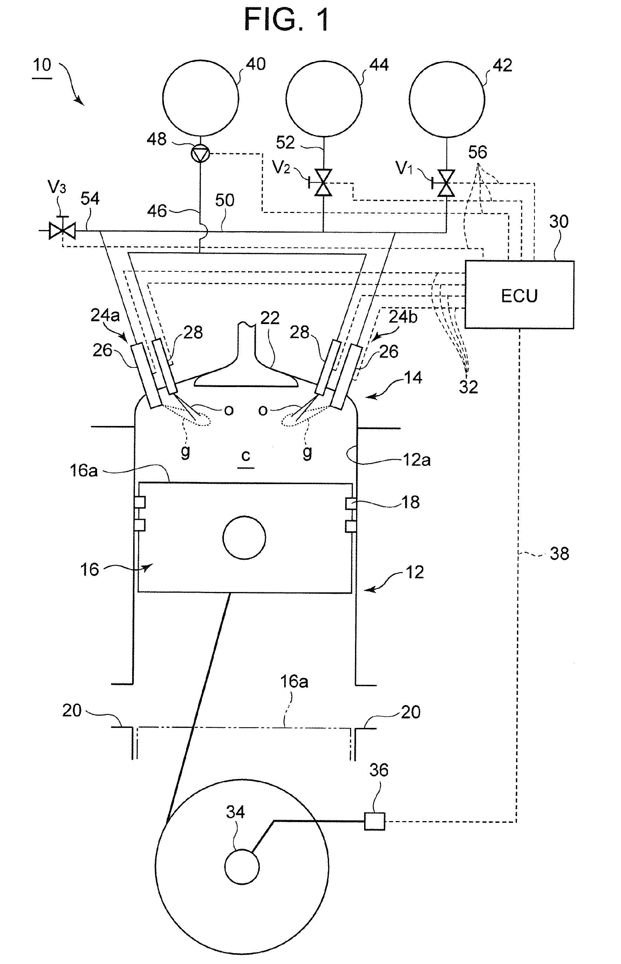

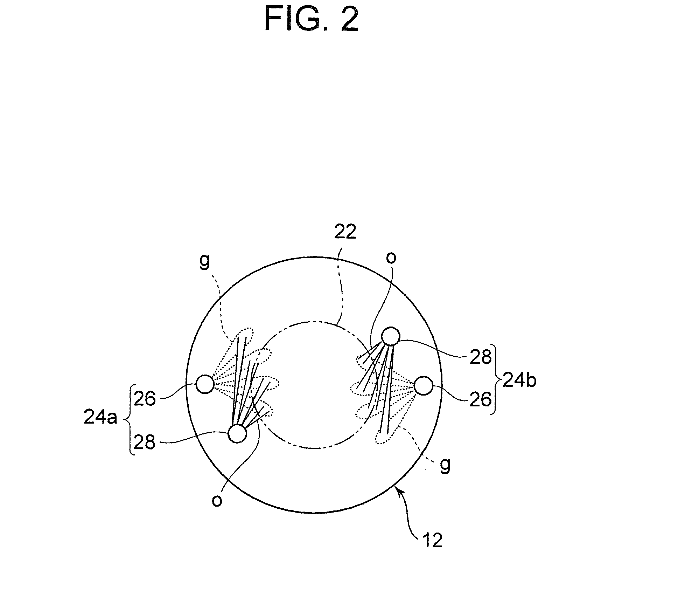

An embodiment of a dual-fuel diesel engine to which the present invention is applied will be described in reference to FIGs. 1 to 4. The present embodiment is an example where the present invention is applied to a two-cycle dual-fuel diesel engine.

As illustrated in FIG. 1, a dual-fuel diesel engine 10 of the present embodiment includes a cylinder 12 of a cylindrical shape, a cylinder head 14 connected to the upper end of the cylinder 12, and a piston 16 housed inside the cylinder 12 so as to be freely reciprocable. A combustion chamber "c" is defined by the surrounding wall 12a of the cylinder 12, the cylinder head 14, and the top face 16a of the piston 16. piston rings 18 are disposed on the outer circumferential face of the piston 16 so as to seal a gap between the outer circumferential face of the piston 16 and the surrounding wall 12a of the cylinder 12.

On the surrounding wall 12a at a bottom region of the cylinder 12, a plurality of scavenging ports 20 are opened at equal intervals in the circumferential direction. The scavenging ports 20 are formed above the top face 16a of the piston 16 being positioned in the region of the bottom dead center (as indicated by the double-dotted chain line in the drawing). Upon the piston 16 being positioned in the region of the bottom dead center, air is supplied to the combustion chamber "c" from the scavenging ports 20.

Further, while an exhaust port opens at the center of the cylinder head 14, an exhaust valve 22 is disposed on the exhaust port for opening and closing the exhaust port. In the scavenging stroke in which the piston 16 ascends, this exhaust valve 22 is kept open until the piston 16 reaches the position of approximately 100° before top dead center. Then, the air supplied to the combustion chamber "c" from the scavenging ports 20 scavenges the exhaust gas from the previous stroke that has remained in the combustion chamber "c".

On the cylinder head 14, a pair of dual-fuel injectors 24a, 24b is disposed around the exhaust valve 22. The dual-fuel injectors 24a, 24b are arranged so that they are symmetric about the central axis line of the cylinder 12 at an interval of 180° from each other. The dual-fuel injection devices 24a, 24b each include a gas fuel injector 26 that injects a gas fuel "g" such as natural gas to the combustion chamber "c" and a pilot fuel injector 28 that similarly injects an oil fuel "o" having high compression-ignition properties to the combustion chamber "c".

The gas fuel injectors 26 and the pilot fuel injectors 28 are connected to an engine control unit (ECU) 30 through cables 32, so that the ECU 12 controls fuel injecting operation. The ECU 30 is connected to a crank angle sensor 36 that detects a rotation angle of a crank shaft 34 through a cable 38. The ECU 30 detects a phase of the piston 16 by receiving a detection signal of a rotation angle of the crank shaft 34 from the crank angle sensor 36 through the cable 38.

The gas fuel injectors 26 and the pilot fuel injectors 28 inject a gas fuel "g" and an oil fuel "o" into the combustion chamber "c" at a predetermined timing based on a signal transmitted from the ECU 30. Upon the piston 16 being in the vicinity of the top dead center (for instance, 0° to 100° before top dead center), the gas fuel injectors 26 and the pilot fuel injectors 28 inject the corresponding fuels nearly at the same time. In the combustion chamber "c" of high-temperature atmosphere, the oil fuel "o" having high compression-ignition properties self-ignites, which causes the gas fuel "g" injected nearly at the same time to combust so as to generate flame in the combustion chamber "c".

In the vicinity of the dual-fuel diesel engine 10, an oil fuel reservoir tank 40, a gas fuel reservoir tank 42 and a replacement gas reservoir tank 44 are disposed. The oil fuel reservoir tank 40 is connected to the oil fuel injectors 28 of the dual-fuel injectors 24a, 24b through oil fuel supply path 46. A liquid pump 48 is disposed in the oil fuel supply path 46. The gas fuel reservoir tank 42 is connected to the gas fuel injectors 26 of the dual-fuel injectors 24a, 24b through the gas fuel supply path 50. An oil fuel is stored in the oil fuel reservoir tank 40, while a gas fuel such as natural gas is stored in a pressurized state in the gas fuel reservoir tank 42.

An electromagnetic opening-and-closing valve V₁ is disposed in the gas fuel supply path 50. The gas fuel supply path 50 is connected to the replacement gas reservoir tank 44 through a replacement gas supply path 52. The replacement gas supply path 52 is connected to the gas fuel supply path 50 at the downstream side relative to the electromagnetic opening-and-closing valve V₁. In the replacement gas reservoir tank 44, an inert gas such as nitrogen gas or air is stored in a pressurized state as a replacement gas. Further, to the gas fuel supply path 50, an atmosphere introducing path 54 is connected at the downstream side relative to the connection point to the replacement gas supply path 52. An electromagnetic opening-and-closing valve V₃ is disposed in the atmosphere introducing path 54. The liquid pump 48 and the electromagnetic opening-and-closing valves V₁ to V₃ are connected to the ECU 30 through cables 56, so that the ECU 30 controls their operations.

In such configuration, except in the extremely-low-load operating range, the dual-fuel injectors 24a, 24b normally inject both of the gas fuel "g" and the oil fuel "o" (dual-fuel combustion mode). When shifting from the normal load operation to the extremely-low-load operating range, or in other situations, injection of the gas fuel from the gas fuel injectors 26 is stopped and only the oil fuel "o" is injected from the oil fuel injectors 28 (single combustion mode).

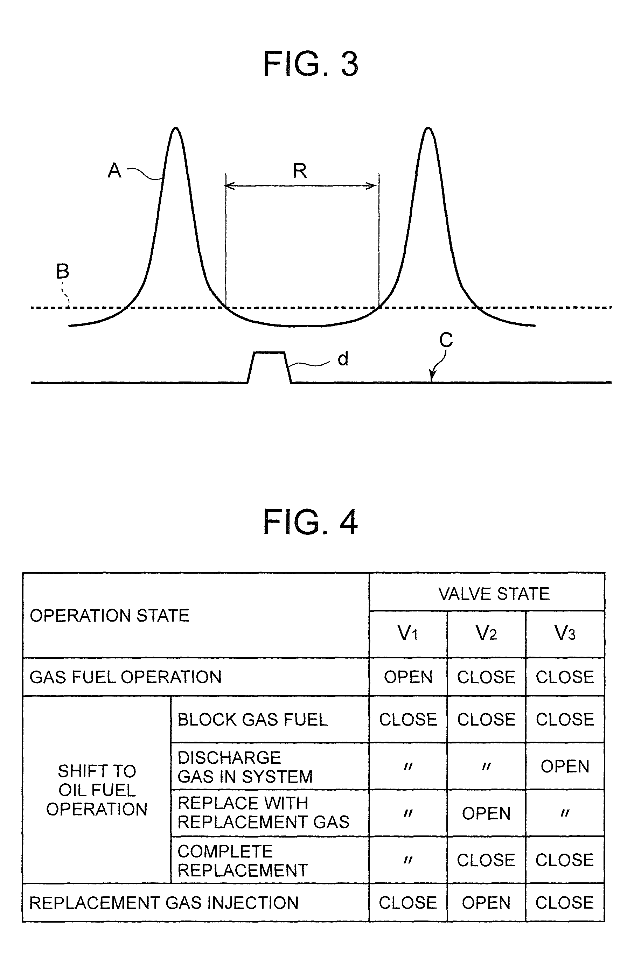

In FIG. 3, the line A represents the pressure of the combustion chamber "c", the line B represents the pressure of the replacement gas inside the replacement gas reservoir tank 44, and the line C represents the time when the replacement gas is injected from the gas fuel injectors 26. The replacement gas pressure inside the replacement gas reservoir tank 44 is kept constant. The time "d" when the replacement gas is injected from the gas fuel injectors 26 is selected to be in the time range R in which the piston 16 is positioned in the region of the bottom dead center and the pressure of the combustion chamber "c" is lower than the pressure inside the replacement gas reservoir tank 44.

In the present embodiment, when shifting from the dual-fuel combustion mode to the single combustion mode, the ECU 30 performs opening-and-closing operations for the electromagnetic opening-and-closing valves V₁, V₂ and V₃ according to the procedure illustrated in FIG. 4. In the drawing, during the dual-fuel combustion mode, the ECU 30 controls the electromagnetic opening-and-closing valve V₁ to be open and the electromagnetic opening-and-closing valves V₂ and V₃ to be closed. When shifting to the single combustion mode, the electromagnetic opening-and-closing valve V₁ is closed so as to block the gas fuel. Then, the electromagnetic opening-and-closing valve V₃ is opened to discharge the gas fuel remaining in the gas fuel supply path 50 to the outside of the system.

Next, the electromagnetic opening-and-closing valve V₂ is opened to introduce the replacement gas from the replacement gas reservoir tank 44 into the gas fuel supply path 50 so as to replace contents in the gas fuel supply path 50 with the replacement gas. After the replacement is completed, the electromagnetic opening-and-closing valves V₂ and V₃ are closed. Then, the electromagnetic opening-and-closing valve V₂ is opened to inject the replacement gas from the gas fuel injectors 26. As a result, during the single combustion mode, it is possible to blow off combustion residues adhering to the nozzle holes of the gas fuel injectors 26 and thus to prevent blockage of the nozzle holes.

Next, in order to return to the dual combustion mode from this state, the electromagnetic opening-and-closing valve V₂ is closed at first, and then the electromagnetic opening-and-closing valve V₃ is opened so as to discharge the replacement gas inside the gas fuel supply path 50 to the outside of the system. Then, the electromagnetic opening-and-closing valve V₁ is opened to replace the contents of the gas fuel supply path 50 with the gas fuel. Further, the electromagnetic opening-and-closing valve V₃ is closed to supply the gas fuel "g" to the gas fuel injectors 26.

According to the present embodiment, by injecting the replacement gas from the gas fuel injectors 26 during operation in the single injection mode in which the oil fuel "o" is injected, it is possible to blow off the combustion residues adhering to the nozzle holes of the gas fuel injectors 26. As a result, it is possible to prevent blockage of the nozzle holes of the gas fuel injectors 26 and to shift from the single combustion mode to the dual combustion mode smoothly. Further, by injecting the replacement gas in the time range R in which the piston 16 is positioned in the region of the bottom dead center and the pressure of the combustion chamber "c" is lower than the pressure inside the replacement gas reservoir tank 44, injection of the replacement gas is facilitated.

Still further, only by opening the electromagnetic opening-and-closing valve V₂ by the ECU 30, the replacement gas inside the inert gas reservoir tank 44 is injected from the gas fuel injectors 26 by its own pressure. Thus, there is no driving device needed for injecting the replacement gas, and thus the cost is reduced. Moreover, automation is enabled by a simple control mechanism where the ECU 30 only controls the electromagnetic opening-and-closing valves V₁, V₂ and V₃. Furthermore, upon switching between the dual combustion mode and the single combustion mode, it is possible to discharge the gas fuel or the replacement gas remaining in the gas fuel supply path 50 to the outside air from the atmosphere introducing path 54. As a result, the previously remaining gas is not injected from the gas fuel injectors 26 immediately after the switch, which makes it possible to smoothly switch to supplying the next gas.

While the present embodiment is an example where a pair of dual-fuel injectors 24a, 24b is disposed on the cylinder head 14, the present invention may be applied to the case where there is one dual-fuel injector, or there are three or more of the same. Further, while the present embodiment is an example where the present invention is applied to a two-cycle dual-fuel diesel engine, the present invention may be applied to a four-cycle dual-fuel diesel engine.

### Industrial Applicability

According to the present invention, during operation in the single combustion mode where only an oil fuel is injected, it is possible to prevent blockage of the nozzle holes of the gas fuel injectors and to smoothly shift from the single combustion mode to the dual combustion mode.

## Claims

1. An operation method for a dual-fuel diesel engine configured to inject an oil fuel for ignition from a pilot fuel injector and inject a gas fuel from a gas fuel injector into a combustion chamber inside a cylinder, the method comprising:
a first step of operating the dual-fuel diesel engine in a single combustion mode in which only the oil fuel is injected into the combustion chamber; and
a second step of injecting a replacement gas from the gas fuel injector so as to remove combustion residues adhering to a nozzle hole of the gas fuel injector upon a pressure in the combustion chamber becoming lower than a supply pressure of the replacement gas during operation in the single injection mode.

2. The operation method for a dual-fuel diesel engine according to claim 1,
wherein a replacement gas reservoir tank is connected to the gas fuel injector via a replacement gas supply path, and
wherein, in the second step, the replacement gas is injected into the combustion chamber from the replacement gas reservoir tank upon the pressure in the combustion chamber becoming lower than a pressure in the replacement gas reservoir tank.

3. A dual-fuel diesel engine comprising:
a cylinder;
a piston configured to reciprocate inside the cylinder;
a cylinder head configured to define a combustion chamber with the cylinder;
a pilot fuel injector configured to inject an oil fuel;
a gas fuel injector configured to inject a gas fuel;
an oil fuel supply device configured to supply the oil fuel to the pilot fuel injector;
a gas fuel supply device configured to supply the gas fuel to the gas fuel injector;
a replacement gas supply device configured to supply a replacement gas to the gas fuel injector;
a piston position detection device configured to detect a position of the piston; and
a controller configured to inject the replacement gas from the gas fuel injector upon a pressure in the combustion chamber becoming lower than a supply pressure of the replacement gas during operation in a single injection mode in which only the oil fuel is injected into the combustion chamber.

4. The dual-fuel diesel engine according to claim 3,
wherein the gas fuel supply device includes a gas fuel reservoir tank connected to the gas fuel injector via a gas fuel supply path and a first opening-and-closing valve disposed in the gas fuel supply path,
wherein the replacement gas supply device includes a replacement gas reservoir tank connected to the gas fuel injector via a replacement gas fuel supply path that branches from the gas fuel supply path at a downstream side relative to the first opening-and-closing valve and a second opening-and-closing valve disposed in the replacement gas supply path,
wherein the dual-fuel diesel engine further includes an atmosphere introducing path that branches from the gas fuel supply path at a downstream side relative to a branch point where the replacement gas supply path branches and a third opening-and-closing valve disposed in the atmosphere introducing path, and
wherein the controller is configured capable of controlling each of the opening-and-closing valves.
